Europäisches Patentamt

European Patent Office

Office européen des brevets

(19)

(11)  EP 0 501 558 B1

(12)  EUROPÄISCHE PATENTSCHRIFT

(45) Veröffentlichungstag und Bekanntmachung des Hinweises auf die Patenterteilung:
14.08.1996  Patentblatt 1996/33

(51) Int Cl.$^6$: **H04N 9/78**

(21) Anmeldenummer: 92200448.6

(22) Anmeldetag: 18.02.1992

(54) **Schaltungsanordnung zur Auftrennung eines Farbbildsignals in ein Farbsignal und ein Helligkeitssignal**

Circuit arrangment for separating a color image signal into a color signal and a luminance signal

Dispositif de séparation d'un signal d'image couleur en un signal de couleur et un signal de luminance

(84) Benannte Vertragsstaaten:
**DE ES FR GB IT**

(30) Priorität: **27.02.1991  DE 4106076**

(43) Veröffentlichungstag der Anmeldung:
**02.09.1992  Patentblatt 1992/36**

(73) Patentinhaber:
• **Philips Patentverwaltung GmbH**
  **22335 Hamburg (DE)**
  Benannte Vertragsstaaten:
  **DE**
• **Philips Electronics N.V.**
  **5621 BA Eindhoven (NL)**
  Benannte Vertragsstaaten:
  **ES FR GB IT**

(72) Erfinder:
• **Suwald, Thomas**
  **W-2000 Hamburg 60 (DE)**
• **Meyer, Robert**
  **W-2000 Hamburg 54 (DE)**
• **Pelgrom, Marcel, Dr.**
  **NL-5708 KS Helmond (NL)**

(74) Vertreter: **von Laue, Hanns-Ulrich, Dipl.-Ing. et al**
**Philips Patentverwaltung GmbH,**
**Röntgenstrasse 24**
**22335 Hamburg (DE)**

(56) Entgegenhaltungen:
WO-A-90/13978                    DE-A- 3 936 242
US-A- 4 882 615

• PAJP BAND 14, NU 455, (E-0985) & JP-A-2183615

**Beschreibung**

Schaltungsanordnung zur Auftrennung eines Farbbildsignals in ein Farbsignal und ein Helligkeitssignal

Die Erfindung betrifft eine Schaltungsanordnung zur Auftrennung eines Farbbildsignals in ein in diesem als moduliertem Farbträger enthaltenes Farbsignal und in ein Helligkeitssignal, in welcher mittels zweier hintereinandergeschalteter Verzögerungselemente, die für PAL-Signale jeweils eine Verzögerungszeit von zwei Bildzeilen bzw. für die NTSC-Signale von einer Bildzeile aufweisen, zeitgleich zur Verfügung stehende Signale dreier Bildzeilen nach Durchlaufen je eines Farbsignals-Bandpaßfilters zur Gewinnung zweier Kammfilterfunktionen herangezogen werden und in welcher aus den Signalen der drei Bildzeilen und der beiden Kammfilterfunktionen laufend dasjenige Signal mit dem mittleren Amplituden-Momentanwert ausgefiltert wird, wobei dieses ausgefilterte Signal das abgetrennte Farbsignal darstellt, das zur Gewinnung des Helligkeitssignals mit dem um eine Verzögerungszeit verzögerten Farbbildsignal addiert wird. Eine solche Schaltungsanordnung ist aus der Japanischen Offenlegungschrift JP-A-2 183 615 bekannt.

Übliche Farbbildsignale, also z.B. insbesondere Farbfernsehsignale, tragen die in ihnen enthaltenen Farbinformationen als einen in Abhängigkeit dieser Informationen modulierten Farbträger. Bei der Wiedergabe derartiger Farbbildsignale besteht nun das Problem, dieses Farbsignal, das als modulierter Farbträger die Farbinformationen enthält, vom übrigen Signal, insbesondere von dem Helligkeitssignal, zu trennen. Hierzu können einfache Bandpaßfilter eingesetzt werden, mittels derer jedoch eine vollständige Trennung der spektral ineinander verkämmten Komponenten des Farbsignals und des Helligkeitssignals nicht gelingt. Es sind daher ferner Kammfilter bekannt, bei denen für eine Bildzeile eine solche Verzögerung vorgenommen wird, daß dieses verzögerte Signal mit dem Signal einer anderen Bildzeile bezüglich der Komponenten des Farbträgers in Gegenphase vorliegt. Diese beiden Komponenten werden subtrahiert, wodurch im wesentlichen die vorliegenden Komponenten des Farbträgers übrigbleiben. Auf diese Weise ist eine Trennung zwischen Farbsignal und Helligkeitssignal möglich.

Ferner existiert von der Firma Toshiba eine integrierte Schaltung mit der Typbezeichnung TA 8748 N. Für NTSC-Signale sind zwei Verzögerungselemente extern vorgesehen, die jeweils eine Verzögerung von einer Bildzeile vornehmen. Aus dem unverzögerten und den beiden verzögerten Signalen werden zwei Kammfilterfunktionen gewonnen. Aus den Signalen der aktuellen Bildzeile und den Ausgangssignalen der beiden Verzögerungselemente sowie den beiden Kammfilterfunktionen wird bei der Toshiba-Schaltung mittels zweier hintereinandergeschalteter Medianfilter die Auswahl desjenigen der fünf Signale vorgenommen, das einen mittleren Amplitudenwert aufweist. Das Problem bei dieser Schaltungsanordnung besteht darin, daß sich für die fünf Signale, von denen das ausgefilterte am Filterausgang erscheint, verschiedene Durchlaufzeiten ergeben. Dies liegt daran, daß zwei hintereinandergeschaltete Medianfilter vorgesehen sind und daß einige der Signale nur eines der beiden Filter durchlaufen. Die sich dadurch ergebenden verschiedenen Laufzeiten für die Signale haben für die Ausfilterung negative Folgen, da die Phasenbeziehung für die nachfolgende Addition des ausgefilterten Farbsignals mit dem Helligkeitssignal von äußerster Wichtigkeit ist, da sich nur bei exakter Phasenlage der beiden Signale zueinander die gewünschten Auslöschungs- bzw. Addierungseffekte unverfälscht ergeben.

Es ist Aufgabe der Erfindung, eine Schaltungsanordnung zu schaffen, welche für das abgetrennte Farbsignal immer konstante Laufzeiten produziert und somit immer eine phasenrichtige Addition mit dem Helligkeitssignal gestattet.

Diese Aufgabe ist erfindungsgemäß dadurch gelöst, daß ein einstufiges Medianfilter vorgesehen ist, in welchem die Amplituden der zeitgleich vorliegenden Signale der drei Bildzeilen und der beiden Kammfilterfunktionen in einer Komparatorstufe miteinander verglichen werden, welche in Abhängigkeit der Vergleichsergebnisse logische Vergleichssignale an eine Auswahllogik liefert, die anhand der Vergleichssignale laufend dasjenige der der Komparatorstufe zugeführten Signale mit dem mittleren Amplituden-Momentanwert ermittelt und auf den Medianfilterausgang schaltet.

Für die Ausfilterung des Signals mit dem mittleren Amplitudenmomentanwert aus den Signalen der drei Bildzeilen sowie der beiden Kammfilterfunktionen ist also ein einstufiges Medianfilter vorgesehen, welches eine Komparatorstufe aufweist, in der diese fünf Signale miteinander verglichen werden, und welches nachgeschaltet eine Auswahllogik aufweist, welche die von der Komparatorstufe gelieferten Vergleichssignale auswertet. Anhand dieser Vergleichssignale wird dann auf den Ausgang des Medianfilters dasjenige Signal mit dem mittleren Amplituden-Momentanwert geschaltet. Da bei dieser Schaltungsanordnung die fünf Signale gleich behandelt werden, ergibt sich für sie auch eine identische Laufzeit, so daß jederzeit eine phasenrichtige Addition des Farbsignals und des Helligkeitssignals erfolgt.

Da zwischen den beiden Kammfilterfunktionen und den Signalen der drei Bildzeilen, also der aktuellen Bildzeile sowie denjenigen Bildzeilen, die die beiden hintereinandergeschalteten Verzögerungselemente als Ausgangssignale liefern, eine logische Abhängigkeit besteht, braucht in der Komparatorstufe kein Vergleich jedes dieser fünf Signale mit sämtlichen übrigen zu erfolgen. Das Medianfilter kann also relativ einfach gehalten werden. Dazu sind nach einer Ausgestaltung der Erfindung in der Komparatorstufe fünf Komparatoren vorgesehen, welche je zwei Signale miteinander vergleichen und in Abhängigkeit des Vergleichssignals ein logisches Ausgangssignal liefern und von denen drei Komparatoren für den Vergleich der zeitgleich vorliegenden Signale der drei Bildzeilen untereinander und zwei Komparatoren für den Vergleich der Signale der Kammfilterfunktionen mit jeweils demjenigen Signal der drei Bildzeilen vorgesehen sind, welches nicht zur Bildung der jeweiligen Kammfilterfunktion herangezogen wurde. Es genügen also fünf Komparatoren, um aus den fünf Signalen anhand der von den Komparatoren gelieferten Vergleichssignale in der nachgeschalteten Auswahllogik sicher auf dasjenige der fünf Signale mit dem mittleren Amplituden-Momentanwert zu schließen. Dies liegt daran, daß die Kammfilterfunktionen sich bereits jeweils aus der Kombination zweier der drei Bildsignale ergeben und somit eine logische Abhängigkeit gegeben ist, die einen vollständigen Vergleich der fünf Signale miteinander nicht erforderlich macht.

Dazu ist nach einer weiteren Ausgestaltung der Erfindung vorgesehen, daß in der Auswahllogik fünf Schaltsignale erzeugt werden, welche den zeitgleich vorliegenden Signalen A, B und C der drei Bildzeilen bzw. den beiden Signalen AB und BC der Kammfilterfunktionen zugeordnet sind und welche nach folgenden logischen Operationen gewonnen werden:

$$SWA = [(A>B) \wedge (C>A) \wedge (BC>A)] \vee [\overline{(A>B)} \wedge \overline{(C>A)} \wedge \overline{(BC>A)}]$$

$$SWB = [(A>B) \wedge (B>C)] \vee [\overline{(A>B)} \wedge \overline{(B>C)}],$$

$$SWC = [(B>C) \wedge (C>A) \wedge \overline{(AB>C)}] \vee [\overline{(B>C)} \wedge \overline{(C>A)} \wedge (AB>C)],$$

$$SWAB = [(B>C) \wedge (C>A) \wedge (AB>C)] \vee [\overline{(B>C)} \wedge \overline{(C>A)} \wedge \overline{(AB>C)}],$$

$$SWBC = [(A>B) \wedge (C>A) \wedge \overline{(BC>A)}] \vee [\overline{(A>B)} \wedge \overline{(C>A)} \wedge (BC>A)].$$

Diese in der Auswahllogik durchgeführten logischen Operationen liefern fünf Schaltsignale. Diese Schaltsignale stellen noch nicht das ausgefilterte Ausgangssignal des Medianfilters dar, sondern stellen logische Schaltsignale dar, die den fünf Eingangssignalen des Medianfilters zugeordnet sind. Ergibt sich nun in der Auswahllogik, daß eine der fünf oben angegebenen Gleichungen wahr ist, so wird das entsprechende Schaltsignal aktiv geschaltet und das dem Schaltsignal zugeordnete Signal der fünf Eingangssignale des Medianfilters wird auf den Ausgang dieses Filters geschaltet. Die fünf zu vergleichenden Signale durchlaufen also selbst nicht die Auswahllogik. In der Auswahllogik werden nur die oben angegebenen logischen Operationen durchgeführt, welche Schaltsignale liefern, mittels derer auf den Medianfilterausgang das jeweils zugeordnete Eingangssignal des Medianfilters geschaltet wird. Die Auswahllogik kann so ausgelegt werden, daß sie unabhängig davon, welche der fünf logischen Operationen einen wahren Aussagewert hat, immer mit der gleichen Zeitverzögerung arbeitet. Somit ergibt sich für die zeitliche Verzögerung des Ausgangssignals des Medianfilters immer der gleiche Wert, der auch davon unabhängig ist, welches der fünf Signale auf den Medianfilterausgang geschaltet wird.

Zum Schalten der fünf Schaltsignale auf den Medianfilterausgang ist nach einer weiteren Ausgestaltung der Erfindung vorgesehen, daß die fünf Schaltsignale auf fünf Schalter geleitet sind, welche das dem jeweiligen Schaltsignal zugeordnete Eingangssignal der Komparatorstufe in Abhängigkeit der Aussage des Schaltsignals auf den Filterausgang schalten.

In der Praxis kann es unter bestimmten Umständen dazu kommen, daß auf den Medianfilterausgang nicht wie gewünscht nur eines der fünf Signale sondern beispielsweise zwei oder drei Signale geschaltet werden. So kann für die Auswahl desjenigen Signals mit dem mittleren Amplituden-Momentanwert schon dann ein Problem entstehen, wenn wenigstens zwei der Signale gleichen Amplituden-Momentanwert aufweisen. Ferner können Probleme dadurch entstehen, daß die in der Komparatorstufe vorgesehenen Komparatoren an ihren Eingängen Offsetfehler aufweisen, also Eingänge haben, die bei unterschiedlichen Signalpegeln schalten. Es ist daher vorteilhaft, dem Medianfilter einen Mittelwertbildner nachzuschalten, welcher in dem Falle, daß die Auswahllogik mehrere Schaltsignale gleichzeitig erzeugt, das Ausgangssignal des Medianfilters durch die Zahl der aktiven Schaltsignale teilt. Somit wird aus den ausgewählten Signalen ein Mittelwert gebildet, welcher anstelle des Medianfilter-Ausgangssignals zur weiteren Signalverarbeitung herangezogen wird. Auf diese Weise können also die Probleme, die sich bei Signalgleichheit bzw. bei unterschiedichen Offsets der Komparatoren in dem Medianfilter ergeben, beseitigt werden.

Anstelle des Mittelwertbildners kann auch vorgesehen sein, daß die Schaltsignale verschiedenen Prioritätsklassen zugeordnet werden und daß bei mehreren gleichzeitig aktivierten Schaltsignalen von der Vergleichslogik nur dasjenige Schaltsignal mit der höchsten Priorität auf den Medianfilterausgang geschaltet wird.

Sind also, beispielsweise durch Offsetfehler in der Komparatorstufe, aufgrund der in der Vergleichslogik vorgenommenen logischen Vergleichsoperationen mehrere Schaltsignale gleichzeitig zu aktivieren, so wird gleichwohl nur eines dieser Schaltsignale aktiviert. Dazu sind die Schaltsignale in verschiedene Prioritätsklassen eingeordnet und es wird von den an sich aufgrund der Vergleichsoperationen zu aktivierenden Schaltsignalen nur dasjenige Schaltsignal tatsächlich aktiviert, welches der höchsten Prioritätsklasse zugeordnet ist.

Nach einer weiteren Ausgestaltung der Erfindung ist vorgesehen, daß die verschiedenen Prioritäten mittels entsprechender Vergleichsoperationen in der Auswahllogik realisiert sind. Damit wird erzielt, daß bereits nach Vornahme der Vergleichsoperationen nur noch ein Schaltsignal zu aktivieren ist.

Die dazu in der Vergleichslogik vorzunehmenden logischen Operationen zur Gewinnung nur eines Schaltsignals können vorteilhaft wie folgt gewählt sein:

$$SWA = [(A>B) \land (C>A) \land (BC>A) \land (\overline{B>C})] \lor [(\overline{A>B}) \land (\overline{C>A})] \land$$

$$(\overline{BC>A}) \land (B>C)]$$

$$SWB = [(A>B) \land (B>C)] \lor [(\overline{A>B}) \land (\overline{B>C})],$$

$$SWC = [(B>C) \land (C>A) \land (\overline{AB>C}) \land (\overline{A>B})] \lor [(\overline{B>C}) \land (\overline{C>A}) \land$$

$$(AB>C) \land (A>B)]$$

$$SWAB = [(B>C) \land (C>A) \land (AB>C) \land (\overline{A>B})] \lor [(\overline{B>C}) \lor (\overline{C>A}) \land$$

$$(\overline{AB>C}) \land (A>B)]$$

$$SWBC = [(A>B) \land (C>A) \land (\overline{BC>A}) \land (\overline{B>C})] \lor [(\overline{A>B}) \land (\overline{C>A}) \land$$

$$(BC>A) \land (B>C)].$$

Nach einer weiteren Ausgestaltung der Erfindung sind Laufzeitausgleichselemente vorgesehen, welche das verzögerte Farbbildsignal vor Addition mit dem abgetrennten Farbsignal zusätzlich so lange verzögern, daß ein Ausgleich der Laufzeiten der Signalverarbeitung zur Gewinnung des abgetrennten Farbsignals, insbesondere der Bandpaßfilter und des Medianfilters, erfolgt.

Die erfindungsgemäße Schaltungsanordnung stellt sicher, daß das abgetrennte Farbsignal immer mit der gleichen zeitlichen Verzögerung, also immer mit dem gleichen Phasenwert zur Verfügung steht. Es kann daher vorteilhafterweise das verzögerte Farbbildsignal nun auch um diesen gleichen Wert verzögert werden, so daß immer eine phasenrichtige Addition beider Signale zum Hellgkeitssignal erfolgt.

Nach einer weiteren Ausgestaltung der Erfindung ist vorgesehen, daß die Signale der drei Bildzeilen dem Medianfilter mit einer solchen zeitlichen Verzögerung zugeführt werden, daß sie am Medianfiltereingang in gleicher Phasenlage mit den beiden Kammfilterfunktionen vorliegen.

Um die oben erwähnte exakte Ausfilterung des Farbbildsignals bzw. phasenrichtige Addition des abgetrennten Farbsignals mit dem Farbbildsignal zu ermöglichen, weist das Medianfilter eine konstante Verzögerungszeit auf. Um diese Eigenschaft des Medianfilters voll ausnutzen zu können, ist es vorteilhaft, bereits die fünf dem Medianfilter zugeführten Signale in zueinander gleicher Phasenlage auf den Medianfiltereingang zu schalten. Da für die Erzeugung der beiden Kammfilterfunktionen eine gewisse Zeit erforderlich ist, diese Kammfilterfunktion also zeitlich verzögert vorliegen, werden die Signale der drei Bildzeilen vor Zuführung zum Medianfilter ebenfalls um den gleichen zeitlichen Wert verzögert.

Nach einer weiteren Ausgestaltung der Erfindung ist eine Lastkompensation vorgesehen, welche dadurch erfolgt, daß die Ausgänge gleichartiger Schaltungselemente, die die Signale der drei Bildzeilen und/oder der Kammfilterfunktionen parallel verarbeiten, gleich belastet werden, wodurch mögliche Amplitudenfehler vermieden werden.

In einem integrierten Schaltkreis vorgesehene Schaltungselemente verschiedener Art können auch verschiedenes Verhalten je nach Belastung ihrer Ausgänge aufweisen. Es ist daher vorteilhaft, die Ausgänge bestimmter gleicher Schaltungselemente in der Schaltungsanordnung auch gleich zu belasten. Eventuell vorhandene Nichtlinearitäten treten dann auch für die fünf Signale in gleicher Weise auf.

Diese Elemente zur Lastkompensation können natürlich gleichzeitig für den oben erwähnten Ausgleich der verschiedenen Laufzeiten eingesetzt werden.

Die Lastkompensation erfolgt in idealer Weise dadurch, daß die Ausgänge der gleichartigen Schaltungselemente mit der gleichen Anzahl von Eingängen nachgeschalteter Schaltungselemente belastet werden, welche untereinander ein gleiches elektrisches Verhalten ihrer Eingänge aufweisen. Dies kann beispielsweise dadurch erzielt werden, daß den Schaltungselementen untereinander gleichartige Schaltungselemente nachgeschaltet werden. So werden beispielsweise die fünf Eingangssignale in der Komparatorstufe des Medianfilters einer unterschiedlichen Anzahl von Komparatoren zugeführt. Es entsteht somit für die vorgeschalteten Schaltungselemente eine unterschiedliche Belastung. Diese unterschiedliche Belastung kann durh weitere Komparatoren ausgeglichen werden, welche so beschaltet werden, daß jedes der fünf Signale auf eine gleiche Anzahl von Komparatoreingängen geschaltet wird.

Dies kann in entsprechender Weise auch für andere Schaltungselemente der Schaltungsanordnung erfolgen.

Die Verarbeitung der Signale in der Schaltungsanordnung kann vorteilhafterweise, wie nach einer weiteren Ausgestaltung der Erfindung vorgesehen ist, zeitdiskret erfolgen. Durch die zeitdiskrete Verarbeitung der Signale wird eine exakt definierte Verzögerungszeit bzw. Phasenlage der Signale vereinfacht.

Im folgenden wird ein Ausführungsbeispiel der Erfindung anhand einer in der Fig. in Form eines Blockschaltbildes schematisch dargestellten Schaltungsanordnung näher erläutert.

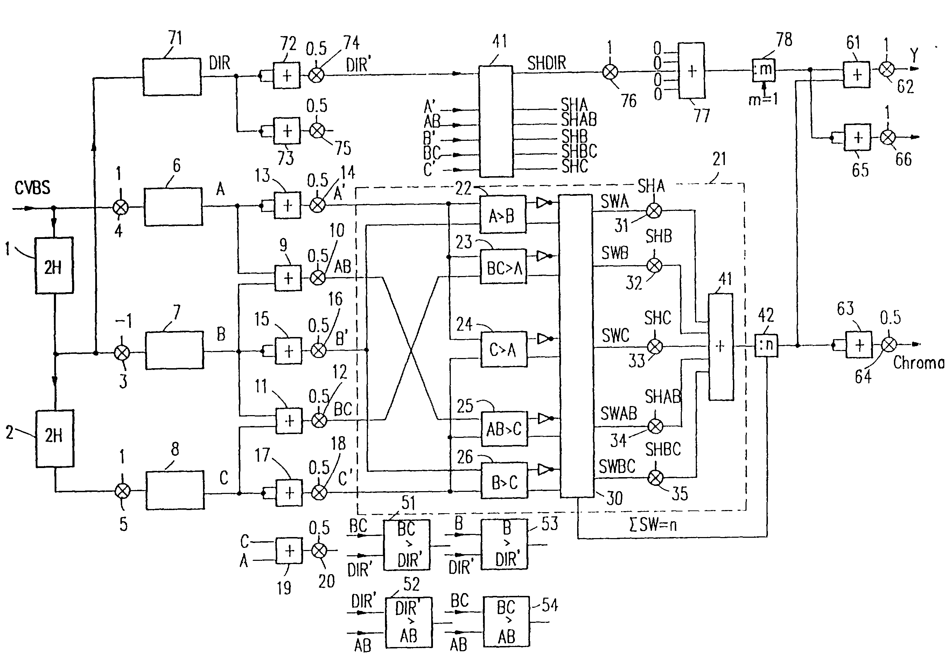

Der in der einzigen Fig. dargestellten Schaltungsanordnung wird ein Farbbildsignal, das in der Fig. mit CVBS bezeichnet ist, zugeführt. Dieses Farbbildsignal beinhaltet ein Helligkeitssignal sowie ein als modulierter Farbträger vorliegendes Farbsignal. Die in der Fig. dargestellte Schaltungsanordnung soll nun diese beiden spektral ineinander verkämmten Signale wieder voneinander trennen. Es wird im folgenden davon ausgegangen, daß es sich bei dem in der Schaltungsanordnung zugeführten Farbbildsignal um ein solches der PAL-Norm handelt.

Das Farbbildsignal ist innerhalb der in der einzigen Fig. dargestellten Schaltungsanordnung einem ersten Verzögerungselement 1 zugeführt. Dieses Verzögerungselement weist eine Verzögerungszeit auf, die der Dauer zweier Bildzeilen entspricht. Da es sich bei dem Farbbildsignal um ein PAL-Signal handelt, weist somit das Ausgangssignal des ersten Verzögerungselementes 1 bezüglich der in ihm enthaltenen Komponenten des Farbträgers eine zu dem Eingangssignal des Verzögerungselementes gegenphasige Phasenlage auf.

Dem ersten Verzögerungselement 1 ist ein zweites Verzögerungselement 2 nachgeschaltet, das die gleiche Verzögerungszeit wie das Verzögerungselement 1 aufweist. Das der Schaltungsanordnung zugeführte Farbsignal, das Ausgangssignal des ersten Verzögerungselementes 1 sowie das Ausgangssignal des zweiten Verzögerungselementes 2 stellen die drei Signale dreier Bildzeilen dar, die zeitgleich zu Verfügung stehen. Aus den Signalen dieser drei Bildzeilen werden zunächst zwei Kammfilterfunktionen gewonnen. Dazu wird das Ausgangssignal des ersten Verzögerungselementes 1 in einem Multiplizierer 3 durch Multiplikation mit dem Faktor -1 invertiert. Um für die Signale der anderen beiden Bildzeilen gleiche Laufzeiten zu erzielen, werden diese in Multiplizierern 4 bzw. 5 mit einem Faktor 1 multipliziert. An den Ausgängen der Multiplizierer 3, 4 und 5 stehen also die drei Signale wieder in gleicher Phasenlage zur Verfügung. Diese Ausgangssignale der drei Multiplizierer sind nun Bandpaßfiltern 6, 7 und 8 zugeführt, welche so ausgelegt sind, daß an ihrem Ausgang nur noch derjenige Frequenzbereich ihres Eingangssignals erscheint, in dem spektrale Komponenten des modulierten Farbträgers auftreten. Die Ausgangssignale der Bandpaßfilter 6, 7 und 8 sind in der Fig. mit A, B und C bezeichnet.

Aus den Signalen A und B wird nun eine erste Kammfilterfunktion gewonnen, welche in der Fig. mit AB bezeichnet ist. Dies geschieht durch Addition der Signale AB in einem Addierer 9. Zum Pegelausgleich ist dem Addierer 9 ein Multiplizierer 10 nachgeschaltet, welcher eine Multiplikation mit dem Faktor 0,5 vornimmt. Das Ausgangssignal des Multiplizierers 10 stellt die erste Kammfilterfunktion AB dar. In gleicher Weise wird aus den Signalen B und C mittels eines Addierers 11 und eines Multiplizierers 12 eine zweite Kammfilterfunktion BC gewonnen. Aufgrund der eingangs erwähnten Phasenbeziehung der Farbträgerkomponenten in den Signalen A und B bzw. B und C stellen die Signale AB und BC bereits ausgefilterte Farbsignale dar. Um jedoch insbesondere an horizontal verlaufenden Farbkanten in dem Farbbild keine Störungen in der Wiedergabe des Farbbildes zu erhalten, muß aus diesen beiden Kammfilterfunktionen sowie den Signalen A, B und C dasjenige Signal mit dem mittleren Amplitudenmomentanwert ausgewählt werden.

Zu diesem Zwecke könnten nun die Signale A, B und C sowie die Kammfilterfunktionen AB und BC bereits einem nachgeschalteten Medianfilter zugeführt werden. Da jedoch die Kammfilterfunktionen AB und BC infolge Durchlaufens je eines Addierers und eines Multiplizierers nicht mehr mit der gleichen Phasenlage vorliegen wie die drei Signale A, B und C, werden die Signale A, B und C in gleicher Weise verzögert, so daß die fünf Signale anschließend zeitgleich bzw. phasengleich zur Verfügung stehen. Dazu durchläuft das Signal A einen Addierer 13 und einen nachgeschalteten Multiplizierer 14, in welchem eine Multiplikation mit einem Faktor 0,5 vorgenommen wird. Das Ausgangssignal des Multiplizierers 14 ist in der Fig. mit A' bezeichnet. In entsprechender Weise durchläuft das Signal B einen Addierer 15 und einen Multiplizierer 16 und das Signal C einen Addierer 17 und einen Multiplizierer 18. Es stehen somit nun in gleicher relativer Phasenlage die Signale A', B', C', AB und BC zur Ausfilterung desjenigen Signals mit dem mittleren Amplituden-Momentanwert zur Verfügung.

Wie bereits erwähnt, wurde durch die Schaltungselemente 13 bis 18 Laufzeitausgleich für die Signale A, B bzw. C vorgenommen. Um ferner eine Lastanpassung für die Ausgänge der Bandpaßfilter 6, 7 und 8 vorzunehmen, weist die Schaltungsanordnung einen weiteren Addierer 19 auf, dem an einem Eingang das Signal A und an einem zweiten Eingang das Signal C zugeführt wird. Der Addierer 19 ist ausgangsseitig mit einem Multiplizierer 20 verschaltet. Der Addierer 19 hat vor allem die Aufgabe, die Ausgänge der Bandpaßfilter 6, 7 und 8 gleich zu belasten. So ist der Ausgang des Bandpaßfilters 7 durch einen Eingang des Addierers 9 durch zwei Eingänge des Addierers 15 und durch einen Eingang des Addierers 11 belastet. Das Ausgangssignal des Bandpaßfilters 6 ist jedoch nur durch zwei Eingänge des Addierers 13 und durch einen Eingang des Addierers 9 belastet. Entsprechendes gilt für den Ausgang des Bandpaßfilters 8. Um nun die Ausgänge der drei Bandpaßfilter mit der jeweils gleichen Zahl von Addierer-Eingängen zu belasten, wird das Ausgangssignal des Bandpaßfilters 6 zusätzlich mit einem Eingang des Addierers 19 belastet. Entsprechendes gilt für das Ausgangssignal des Bandpaßfilters 8. Damit wird im Ergebnis erreicht, daß die Ausgänge der Bandpaßfilter 6, 7 und 8 in exakt gleicher Weise belastet werden, so daß eventuelle Nichtlinearitäten für die Ausgangssignale der drei Bandpaßfilter in gleicher Weise wirksam werden.

Die in der Fig. dargestellte Schaltungsanordnung weist ein Medianfilter 21 auf, dem die fünf Signale A', B', C', AB und BC zugeführt werden. In einer Komparatorstufe, welche fünf Komparatoren 22, 23, 24, 25 und 26 aufweist, wird nun ein Vergleich der fünf Signale vorgenommen. Dabei müssen aufgrund der logischen Abhängigkeit der Signale untereinander nicht alle Signale miteinander verglichen werden. So erfolgt in dem ersten Komparator 22 ein Vergleich der Signale A und B, in dem zweiten Komparator 23 ein Vergleich der Signale BC und A, in dem dritten Komparator 24 ein Vergleich der Signale C und A, in dem vierten Komparator 25 ein Vergleich der Signale AB und C und in dem fünften Komparator 26 ein Vergleich der Signale B und C. Die fünf Komparatoren 25 bis 26 liefern in Abhängigkeit der Vergleichsergebnisse Vergleichssignale an eine nachgeschaltete Auswahllogik 30. Der erste Komparator 22 liefert also beispielsweise dann ein Ausgangssignal, wenn das Signal A größer ist als das Signal B. Dieses Vergleichssignal kann der Auswahllogik 30 gegebenenfalls auch noch zusätzlich in invertierter Form zugeführt werden; diese Invertierung kann aber auch innerhalb der Auswahllogik durchgeführt werden. Entsprechendes gilt für die weiteren Komparatoren 23 bis 26.

Innerhalb der Auswahllogik 30 wird nun anhand der fünf bzw. zehn der Auswahllogik 30 zugeführten Vergleichssignale anhand fünf logischer Gleichungen dasjenige der fünf Signale A', B', C', AB und BC ermittelt, das dem mittleren Amplituden-Momentanwert aufweist. Infolge der oben bereits erläuterten logischen Abhängigkeit der fünf Signale untereinander sind dazu folgende fünf logische Operationen vorzunehmen:

$$SWA = [(A>B) \wedge (C>A) \wedge (BC>A)] \vee [\overline{(A>B)} \wedge \overline{(C>A)} \wedge \overline{(BC>A)}]$$

$$SWB = [(A>B) \wedge (B>C)] \vee [\overline{(A>B)} \wedge \overline{(B>C)}],$$

$$SWC = [(B>C) \wedge (C>A) \wedge \overline{(AB>C)}] \vee [\overline{(B>C)} \wedge \overline{(C>A)} \wedge (AB>C)],$$

$$SWAB = [(B>C) \wedge (C>A) \wedge (AB>C)] \vee [\overline{(B>C)} \wedge \overline{(C>A)} \wedge \overline{(AB>C)}],$$

$$SWBC = [(A>B) \wedge (C>A) \wedge \overline{(BC>A)}] \vee [\overline{(A>B)} \wedge \overline{(C>A)} \wedge (BC>A)].$$

Anhand dieser logischen Operationen erzeugt die Auswahllogik 30 also fünf Schaltsignale SWA, SWB, SWC, SWAB und SWBC, die den fünf Eingangssignalen des Medianfilters 21 zugeordnet sind. Im Idealfall ist nur eines dieser fünf Schaltsignale zur gleichen Zeit aktiv und gibt damit an, daß das zugeordnete Eingangssignal den mittleren Amplituden-Momentanwert der fünf Eingangssignale aufweist. Dieses zugeordnete Eingangssignal wird daher auf den Medianfilterausgang geschaltet, solange das entsprechende Schaltsignal aktiviert ist. Dazu ist der Auswahllogik 30 ein Multiplizierer 31 nachgeschaltet, dem das Schaltsignal SWA zugeführt ist. Ferner ist dem Multiplizierer 31 ein Signal SH A zugeführt, welches das zeitlich verzögerte Eingangssignal A' des Medianfilters 21 darstellt. Dieses Signal A' wird in einer als Laufzeitausgleichselement wirksamen Sample- and Hold-Stufe 41 um eine solche Laufzeit verzögert, mit der das Schaltsignal SWA am Ausgang der Auswahllogik 30 erscheint.

Im Ergebnis schaltet also der Multiplizierer 31 während einer Zeitspanne, in der das zugeordnete Schaltsignal SWA aktiv ist, das verzögerte Signal A', also das Signal SHA auf einen nachgeschalteten Addierer 41. Es sind vier weitere Multiplizierer 32, 33, 34 und 35 vorgesehen, welche in Abhängigkeit der jeweils zugeordneten Schaltsignale SWB, SWC, SWAB bzw. SWBC, die ebenfalls in der Sample- and Hold-Stufe 41 verzögerten Signale SHB, SHC, SHAB bzw. SHBC auf weitere Eingänge des Addierers 41 schalten. Das Ausgangssignal des Addierers 41 stellt das ausgefilterte Signal dar, d.h. also, das abgetrennte Farbsignal des Farbbildsignals.

Da insbesondere die in der Komparatorstufe des Medianfilters 21 vorgesehenen Komparatoren 22 bis 26 verschiedene Offsets aufweisen können und da außerdem der Fall eintreten kann, das wenigstens zwei der Eingangssignale des Medianfilters gleichen Amplituden-Momentanwert aufweisen, ist dem Medianfilterausgang ein Dividierer 42 nachgeschaltet, mittels dessen eine Mittelwertbildung vorgenommen wird. Dies erfolgt dadurch, daß das Ausgangssignal des Addierers 41, also das Ausgangssignal des Medianfilters 21, mittels des Addierers 42 durch die Zahl der aktiven Schaltsignale SWA bis SWBC dividiert wird. Sind also beispielsweise zwei der Schaltsignale aktiv, so gelangen an den Addierer- bzw. Medianfilterausgang diese beiden Signale in addierter Form. Mittels des Dividierers 42 werden diese Signale durch zwei geteilt, so daß im Ergebnis eine Mittelwertbildung aus diesen beiden Signalen vorgenommen wird.

Anstelle der Mittelwertbildung können auch die Schaltsignale SWA bis SWBC in verschiedene Prioritätsklassen eingeordnet werden. Sollten durch die Vergleichslogik 30 mehrere dieser Schaltsignale aktiviert werden, so kann der Vergleichslogik 30 eine in der Fig. nicht dargestellte Vorranglogik nachgeschaltet sein, welche von den von der Vergleichslogik aktivierten Schaltsignalen nur dasjenige auf den Addierer 41 schaltet, welches die höchste Priorität aufweist. Ferner besteht die Möglichkeit, die in der Vergleichslogik 30 vorgenommenen logischen Operationen in der Weise auszugestalten, daß in ihnen bereits die verschiedenen Prioritäten der Schaltsignale berücksichtigt sind.

Um die Eingangssignale A', B', C', AB und BC des Medianfilters 21 in gleicher Weise elektrisch zu belasten, sind Komparatoren 51, 52, 53 und 54 vorgesehen, deren Ausgangssignale in der Schaltungsanordnung nicht ausgewertet werden und welche ausschließlich dazu dienen, die erwähnten Eingangssignale des Medianfilters 21 elektrisch in gleicher Weise zu belasten. Konkret bedeutet dies, daß jedes der Eingangssignale auf eine gleiche Anzahl von Komparator-Eingängen geschaltet wird. Da in der eigentlichen Verschaltung des Medianfilters 21 die fünf Signale auf eine unterschiedliche Anzahl von Eingängen geschaltet werden, wird mittels der Komparatoren 51 bis 54 ein Ausgleich in der Weise vorgenommen, daß solche Signale, die innerhalb des Medianfilters 21 auf weniger Komparatoreingänge geschaltet sind, auf zusätzliche Komparatoreingänge der Komparatoren 51 bis 54 geschaltet werden. Für diesen Ausgleich werden die beiden Kammfilterfunktionen AB und BC auf jeweils zwei Eingänge der Komparatoren 51 bis 54 geschaltet. Ferner wird das Signal B' auf einen Eingang des Komparators 53 geschaltet.

Wie oben bereits erwähnt, stellt das Ausgangssignal des Mittelwertbildners 42 das abgetrennte Farbsignal dar, das zur Gewinnung des Helligkeitssignals mit dem durch das erste Verzögerungsglied 1 verzögerten Farbbildsignal addiert wird. Dazu ist ein Addierer 61 vorgesehen, dem einerseits das Ausgangssignal des Mittelwertbildners 42 und an einem zweiten Eingang das verzögerte Farbbildsignal zugeführt wird. Da jedoch das abgetrennte Farbsignal durch die Bandpaßfilter 6 bis 8, die Addierer 9, 11, 13, 15 und 17, die Multiplizierer 10, 12, 14, 16 und 18 sowie das Medianfilter 41 und den Mittelwertbildner 42 eine zeitliche Verzögerung erfahren hat, ist für das Ausgangssignal des ersten Verzögerungselementes 22 also das um die Dauer zweier Bildzeilen verzögerte Farbbildsignal eine gleiche Verzögerung vorgesehen. Um auch eventuelle Nichtlinearitäten der Schaltungselemente für dieses Farbbildsignal in gleicher Weise wirksam werden zu lassen wie für das abgetrennte Farbsignale, sind jeweils entsprechend der Schaltungselemente vorgesehen. So ist dem Ausgang des ersten Verzögerungselementes 1 ein als Verzögerungselement eingesetztes Bandpaßfilter 71 nachgeschaltet, welches einen Laufzeitausgleich vornimmt, der der Laufzeit der Bandpaßfilter 6 bis 8 entspricht. Ebenfalls für den Laufzeitausgleich, aber auch gleichzeitig für gleiche Belastung des Bandpaßfilters 71 sind diesem zwei Addierer 72 und 73 nachgeschaltet, welche jeweils zwei Eingänge aufweisen. Auf diese insgesamt vier Eingänge der Addierer 72 und 73 ist das Ausgangssignal des Filters 71 geführt. Somit wird auch das Ausgangssignal des Filters 71 in gleicher Weise wie die Ausgangssignale der Filter 6 bis 8 mit jeweils vier Addierer-Eingängen belastet.

Den Addierern 72 und 73 ist je ein Multiplizierer 74 bzw. 75 nachgeschaltet, in welchem eine Multiplikation mit dem Faktor 0,5 vorgenommen wird. Auch durch diese Multiplizierer 74 und 75 wird einerseits ein Laufzeitausgleich und andererseits eine gleiche Anpassung der Addiererausgänge erzielt.

Das Ausgangssignal des Multiplizierers 74 ist der Sample- and Hold-Stufe 41 zugeführt, in der es um den gleichen Wert verzögert wird wie die Signale A', B', C', AB und BC. Dadurch wird für das Farbbildsignal die gleiche Verzögerung vorgenommen wie für diese Signale bzw. die gleiche Verzögerung wie für die Schaltsignale SWA bis SWBC. Um den Ausgang des Multiplizierers 34 in gleicher Weise zu belasten wie die Ausgänge der Multiplizierer 10, 12, 14, 16 und 18 ist sein Ausgangssignal auch auf drei Eingänge der Komparatoren 51, 52, 53 geführt.

Das mittels der Sample- and Hold-Stufe 41 weiterhin verzögerte Farbbildsignal ist in der Fig. SHDIR bezeichnet und wird einem Multiplizierer 76 zugeführt, in welchem dieses Signal mit einem Faktor 1 multipliziert wird. Dieser Multiplizierer dient dazu, einen Laufzeitausgleich entsprechend der Laufzeiten der Multiplizierer 31 bis 35 des Medianfilters 21 zu erzielen. Dem Multiplizierer 76 ist ein Addierer 77 nachgeschaltet, welcher fünf Eingänge aufweist, von denen ein Eingang mit dem Ausgangssignal des Multiplizierers 76 beschaltet ist. Auch dieser Addierer 77 soll eine Laufzeitanpassung bzw. Belastungsanpassung entsprechend dem Addierer 41 erzeugen. Gleiches gilt für einen dem Addierer 77 nachgeschalteten Addierer 78, welcher entsprechendes Verhalten dem Addierer 42 aufweist. Das Ausgangssignal des Addierers 78 liegt nun also in exakt gleicher Phasenlage und auch bezüglich eventueller Nichtlinearitäten der Schaltungselemente in gleicher Weise beeinflußt vor wie das Ausgangssignal des Addierers 42. In dem Addierer 61 kann also eine Addition dieser beiden Signale vorgenommen werden, bei der sichergestellt ist, daß das abgetrennte Farbsignal einerseits und die in dem Farbbildsignal enthaltenen Komponenten des Farbbildsignals exakt in Gegenphase vorliegen und sich somit bei der Addition in dem Addierer 61 gegenseitig aufheben. Das Ausgangssignal des Addierers 61 stellt somit das ausgefilterte Helligkeitssignal dar, das lediglich zum Laufzeitausgleich noch einen Multiplizierer 62 zugeführt wird, in dem es mit einem Faktor 1 multipliziert wird. Dieses ausgefilterte Helligkeitssignal ist in der Fig. mit Y bezeichnet.

Als Laufzeitausgleich für den Addierer 61 ist für das abgetrennte Farbsignal ein Addierer 63 vorgesehen. Dem Addierer 63 ist ein Multiplizierer 64 nachgeschaltet, dem das Ausgangssignal 63 mit einem Faktor von 0,5 multipliziert wird, um wieder den ursprünglichen Pegelwert zu erhalten. Die Multiplizierer 62 und 64 erzeugen somit gleiche Verzögerungszeiten.

Um die Ausgänge der Dividierer 78 bzw. 42 mit der gleichen Anzahl von Adierereingängen zu belasten, ist das Ausgangssignal des Dividierers 78 zwei Eingängen eines weiteren Addierers 65 zugeführt, dem ein weiterer Multiplizierer 66 nachgeschaltet ist.

Bei der in der Fig. dargestellten Schaltungsanordnung ist einerseits gewährleistet, daß in dem Medianfilter eine konstante Verzögerung des von ihm gelieferten abgetrennten Farbsignals erzeugt wird, welche unabhängig davon ist, welches des fünf Eingangssignale des Medianfilters ausgefiltert wurde. Darüber hinaus wird in allen Stufen der Schaltungsanordnung ein Laufzeitausgleich und ein Anpassungsausgleich in der Weise vorgenommen, daß korrespondierende Schaltungselemente innerhalb der Schaltungsanordnung, welche von parallel zu verarbeitenden Signalen durchlaufen werden, ausgangsseitig mit der gleichen Anzahl jeweils gleichartiger Schaltungselemente belastet werden. Somit treten eventuelle Nichtlinearitäten für die parallel zu verarbeitenden Signale in gleicher Weise in Erscheinung. Hierdurch und durch den vollständigen Laufzeitausgleich sowie die exakte Phasenlage des abgetrennten Farbsignals und des verzögerten Farbbildsignals können eine ideale Abtrennung des Farbsignals sowie Befreiung des Helligkeitssignals von Farbsignalkomponenten erzielt werden.

**Patentansprüche**

1. Schaltungsanordnung zur Auftrennung eines Farbbildsignals in ein in diesem als modulierter Farbträger enthaltenes Farbsignal und in ein Helligkeitssignal, in welcher mittels zweier hintereinandergeschalteter Verzögerungselemente (1,2), die für PAL-Signale jeweils eine Verzögerungszeit von zwei Bildzeilen bzw. für die NTSC-Signale von einer Bildzeile aufweisen, zeitgleich zur Verfügung stehende Signale dreier Bildzeilen nach Durchlaufen je eines Farbsignal-Bandpaßfilters (6, 7, 8) zur Gewinnung zweier Kammfilterfunktionen herangezogen werden und in welcher aus den Signalen der drei Bildzeilen und der beiden Kammfilterfunktionen laufend dasjenige Signal mit dem mittleren Amplituden-Momentanwert ausgefiltert wird, wobei dieses ausgefilterte Signal das abgetrennte Farbsignal darstellt, das zur Gewinnung des Helligkeitssignals mit dem um eine Verzögerungszeit verzögerten Farbbildsignal addiert wird,
   <u>dadurch gekennzeichnet</u>, daß ein einstufiges Medianfilter (21) vorgesehen ist, in welchem die Amplituden der zeitgleich vorliegenden Signale der drei Bildzeilen und der beiden Kammfilterfunktionen in einer Komparatorstufe miteinander verglichen werden, welche in Abhängigkeit der Vergleichsergebnisse logische Vergleichssignale an eine Auswahllogik (30) liefert, die anhand der Vergleichssignale laufend dasjenige der der Komparatorstufe zugeführten Signale mit dem mittleren Amplituden-Momentanwert ermittelt und auf den Medianfilterausgang schaltet.

2. Schaltungsanordnung nach Anspruch 1,
   <u>dadurch gekennzeichnet</u>, daß in der Komparatorstufe fünf Komparatoren (22, 23, 24, 25, 26) vorgesehen sind, welche je zwei Signale miteinander vergleichen und in Abhängigkeit des Vergleichssignals ein logisches Ausgangssignal liefern und von denen drei Komparatoren (22, 24, 26) für den Vergleich der zeitgleich vorliegenden Signale der drei Bildzeilen untereinander und zwei Komparatoren (23, 25) für den Vergleich der Signale der Kammfilterfunktionen mit jeweils demjenigen Signal der drei Bildzeilen vorgesehen sind, welches nicht zur Bildung der jeweiligen Kammfilterfunktion herangezogen wurde.

3. Schaltungsanordnung nach Anspruch 1 oder 2,
   <u>dadurch gekennzeichnet</u>, daß in der Auswahllogik (30) fünf Schaltsignale erzeugt werden, welche den zeitgleich vorliegenden Signalen A, B und C der drei Bildzeilen bzw. den beiden Signalen AB und BC der Kammfilterfunktionen zugeordnet sind und welche nach folgenden logischen Operationen gewonnen werden:

$$SWA = [(A>B) \wedge (C>A) \wedge (BC>A)] \vee [\overline{(A>B)} \wedge \overline{(C>A)} \wedge \overline{(BC>A)}]$$

$$SWB = [(A>B) \wedge (B>C)] \vee [\overline{(A>B)} \wedge \overline{(B>C)}],$$

$$SWC = [(B>C) \wedge (C>A) \wedge \overline{(AB>C)}] \vee [\overline{(B>C)} \wedge \overline{(C>A)} \wedge (AB>C)],$$

$$SWAB = [(B>C) \wedge (C>A) \wedge (AB>C)] \vee [\overline{(B>C)} \wedge \overline{(C>A)} \wedge \overline{(AB>C)}],$$

$$SWBC = [(A>B) \wedge (C>A) \wedge \overline{(BC>A)}] \vee [\overline{(A>B)} \wedge \overline{(C>A)} \wedge (BC>A)].$$

4. Schaltungsanordnung nach Anspruch 3,
   <u>dadurch gekennzeichnet</u>, daß die fünf Schaltsignale auf fünf Schalter (31, 32, 33, 34, 35) geleitet sind, welche das dem jeweiligen Schaltsignal zugeordnete Eingangssignal der Komparatorstufe in Abhängigkeit der Aussage des Schaltsignals auf den Filterausgang schalten.

5. Schaltungsanordnung nach einem der Ansprüche 1 bis 4,
   <u>dadurch gekennzeichnet</u>, daß dem Medianfilter ein Mittelwertbildner (42) nachgeschaltet ist, welcher gegebenenfalls mehrere auf den Medianfilterausgang geschaltete Signale durch die Anzahl der auf den Medianfilterausgang geschalteten Signale teilt und welcher dieses Signal zur weiteren Signalverarbeitung an Stelle des Filter-Ausgangssignals zur Verfügung stellt.

6. Schaltungsanordnung nach einem der Ansprüche 1 bis 4,
   dadurch gekennzeichnet, daß die Schaltsignale verschiedenen Prioritätsklassen zugeordnet werden und daß bei mehreren gleichzeitig aktivierten Schaltsignalen von der Vergleichslogik (30) nur dasjenige Schaltsignal mit der höchsten Priorität auf den Medianfilterausgang geschaltet wird.

7. Schaltungsanordnung nach Anspruch 6,
   dadurch gekennzeichnet, daß die verschiedenen Prioritäten mittels entsprechend gewählter Vergleichsoperationen der Auswahllogik (30) realisiert sind.

8. Schaltungsanordnung nach Anspruch 7,
   dadurch gekennzeichnet, daß in der Vergleichslogik folgende logische Operationen zur Gewinnung eines Schaltsignals vorgenommen werden:

$$SWA = [(A>B) \wedge (C>A) \wedge (BC>A) \wedge (\overline{B>C})] \vee [(\overline{A>B}) \wedge (\overline{C>A})] \wedge$$

$$(\overline{BC>A}) \wedge (B>C)]$$

$$SWB = [(A>B) \wedge (B>C)] \vee [(\overline{A>B}) \wedge (\overline{B>C})],$$

$$SWC = [(B>C) \wedge (C>A) \wedge (\overline{AB>C}) \wedge (\overline{A>B})] \wedge [(\overline{B>C}) \wedge (\overline{C>A}) \wedge$$

$$(AB>C) \wedge (A>B)]$$

$$SWAB = [(B>C) \wedge (C>A) \wedge (AB>C) \wedge (\overline{A>B})] \wedge [(\overline{B>C}) \vee (\overline{C>A}) \wedge$$

$$(\overline{AB>C}) \wedge (A>B)]$$

$$SWBC = [(A>B) \wedge (C>A) \wedge (\overline{BC>A}) \wedge (\overline{B>C})] \vee [(\overline{A>B}) \wedge (\overline{C>A}) \wedge$$

$$(BC>A) \wedge (B>C)].$$

9. Schaltungsanordnung nach einem der Ansprüche 1 bis 8,
   dadurch gekennzeichnet, daß Laufzeitausgleichselemente (71, 72, 74, 41, 76, 77, 78) vorgesehen sind, welche das verzögerte Farbbildsignal vor Addition mit dem abgetrennten Farbsignal zusätzlich so lange verzögern, daß ein Ausgleich der Laufzeiten der Signalverarbeitung zur Gewinnung des abgetrennten Farbsignals, insbesondere der Bandpaßfilter (6, 7, 8) und des Medianfilters (21), erfolgt.

10. Schaltungsannordnung nach einem der Ansprüche 1 bis 9,
    dadurch gekennzeichnet, daß die Signale der drei Bildzeilen dem Medianfilter (21) mit einer solchen zeitlichen Verzögerung zugeführt werden, daß sie am Medianfiltereingang in gleicher Phasenlage wie die beiden Kammfilterfunktionen vorliegen.

11. Schaltungsanordnung nach einem der Ansprüche 1 bis 10,
    dadurch gekennzeichnet, daß eine Lastkompensation vorgesehen ist, welche dadurch erfolgt, daß die Ausgänge gleichartiger Schaltungselemente, die die Signale der drei Bildzeilen und/oder der Kammfilterfunktion parallel verarbeiten, gleich belastet werden.

12. Schaltungsanordnung nach Anspruch 11,
    dadurch gekennzeichnet, daß die Lastkompensation dadurch erfolgt, daß die Ausgänge der gleichartigen Schaltungselemente (71, 6, 7, 8; 74, 10, 12, 14, 16, 18; 78, 42) mit der gleichen Anzahl von Eingängen nachgeschalteter Schaltungselemente (73, 19, 51, 52, 53, 54, 65) belastet werden, welche untereinander ein gleiches elektrisches Verhalten ihrer Eingänge aufweisen.

13. Schaltungsanordnung nach einem der Ansprüche 1 bis 12,
    dadurch gekennzeichnet, daß die Signalverarbeitung zeitdiskret erfolgt.

## Claims

1. A circuit arrangement for separating a color picture signal into a modulated chrominance subcarrier signal and into a luminance signal in which arrangement signals of three picture lines made simultaneously available by means of two successively arranged delay elements (1, 2) which have a delay time of two picture lines for PAL signals and one picture line for NTSC signals, are utilized for obtaining two comb filter functions after passing through a respective color bandpass filger (6, 7, 8), and in which arrangement the signal having the middle instantaneous amplitude is constantly filtered out of the signals of the three picture lines and the two comb filter functions, said filtered signal representing the separated color signal which is added to the chrominance signal delayed by one delay time for obtaining the luminace signal, characterized in that a one-stage median filter (21) is provided, in which the amplitudes of the simultaneously available signals of the three picture lines and the two comb filter functions are compared with each other in a comparator stage which supplies logical comparison signals to a selection logic (30) in dependence upon the comparison results, which selection logic constantly determines that signal having the middle instantaneous amplitude of the signals applied to the comparator stage on the basis of the comparison signals and applies that signal to the median filter output.

2. A circuit arrangement as claimed in Claim 1, characterized in that the comparator stage comprises five comparators (22, 23, 24, 25, 26) each of which compares two signals with each other and supplies a logical output signal in dependence upon the comparison, three comparators (22, 24, 26) being used for comparing the simultaneously available signals of the three picture lines with one another, and two comparators (23, 25) being used for comparing the signals of the comb filter functions with that signal of the three picture lines which is not utilized for forming the concerned comb filter function.

3. A circuit arrangement as claimed in Claim 1 or 2, characterized in that five switching signals are generated in the selection logic (30), which signals are associated with the simultaneously available signals A, B and C of the three picture lines and with the two signals AB and BC of the comb filter functions and which are gained in accordance with the following logical operations:

$$SWA=[(A>B) \wedge (C>A) \wedge (BC>A)] \vee [(\overline{A>B}) \wedge (\overline{C>A}) \wedge (\overline{BC>A})]$$

$$SWB=[(A>B) \wedge (B>C)] \vee [(\overline{A>B}) \wedge (\overline{B>C})]$$

$$SWC=[(B>C) \wedge (C>A) \wedge (\overline{AB>C})] \vee [(\overline{AB>C}) \wedge (\overline{C>A}) \wedge (\overline{AB>C})]$$

$$SWAB=[(B>C) \wedge (C>A) \wedge (AB>C)] \vee [(\overline{B>C}) \wedge (\overline{C>A}) \wedge (\overline{AB>C})]$$

$$SWBC=[(A>B) \wedge (C>A) \wedge (\overline{BC>A})] \vee [(\overline{A>B}) \wedge (\overline{C>A}) \wedge (BC>A)]$$

4. A circuit arrangement as claimed in Claim 3, characterized in that the five switching signals are applied to five switches (31, 32, 33, 34, 35) which apply to the filter output that input signal of the comparator stage of which the associated switching signal is active.

5. A circuit arrangement as claimed in any one of Claims 1 to 4, characterized in that the median filter precedes a divider (42) which divides a possible plurality of signals applied to the median filter output by the number of signals applied to the median filter output and which makes the divider output signal instead of the filter output signal available for further signal processing.

6. A circuit arrangement as claimed in any one of Claims 1 to 4, characterized in that the switching signals are classified in different priority classes and in that the comparison logic (30) applies only the switching signal having the highest priority to the median filter output if a plurality of switching signals is simultaneously active.

7. A circuit arrangement as claimed in Claim 6, characterized in that the different priorities are realized by means of corresponding comparison operations by the selection logic (30).

8. A circuit arrangement as claimed in Claim 7, characterized in that the following logical operations for gaining a switching signal are performed in the comparison logic:

$$SWA=[(A>B) \wedge (C>A) \wedge (BC>A) \wedge (\overline{B>C})] \vee [(\overline{A>B}) \wedge (\overline{C>A}) \wedge (\overline{BC>A}) \wedge (B>C)]$$

$$SWB=[(A>B) \wedge (B>C)] \vee [(\overline{A>B}) \wedge (\overline{B>C})]$$

$$SWC=[(B>C) \wedge (C>A) \wedge (\overline{AB>C}) \wedge (\overline{A>B})] \vee [(\overline{B>C}) \wedge (\overline{C>A}) \wedge (AB>C) \wedge (A>B)]$$

$$SWAB=[(B>C) \wedge (C>A) \wedge (AB>C) \wedge (\overline{A>B}] \vee [(\overline{B>C}) \wedge (\overline{C>A}) \wedge (\overline{AB>C}) \wedge (A>B)]$$

$$SWBC=[(A>B) \wedge (C>A) \wedge (\overline{BC>A}) \wedge (\overline{B>C})] \vee [(\overline{A>B}) \wedge (\overline{C>A}) \wedge (BC>A) \wedge (B>C)]$$

9. A circuit arrangement as claimed in any one of Claims 1 to 8,
characterized in that delay time compensation elements (71, 72, 74, 41, 76, 77, 78) are provided, which give the delayed color picture signal before addition to the separated chrominance signal such an extra delay that the delay times of the signal processing for gaining the separated chrominance signal, particularly of the bandpass filters (6, 7, 8) and the median filter (21) are compensated.

10. A circuit arrangement as claimed in any one of Claims 1 to 9,
characterized in that the signals of the three picture lines are applied to the median filter (21) with such a time delay that they have the same phase position at the median filter input as the two comb filter functions.

11. A circuit arrangement as claimed in any one of Claims 1 to 10,
characterized in that a load compensation is provided, which is realized in that the outputs of similar circuit elements parallel processing the signals of the three picture lines and/or the comb filter functions are subjected to equal loads.

12. A circuit arrangement as claimed in Claim 11, characterized in that the load compensation is realized in that the outputs of the similar circuit elements (71, 6, 7, 8; 74, 10, 12, 14, 16, 18; 78, 42) are loaded with the same number of inputs of subsequently arranged circuit elements (73, 19, 51, 52, 53, 54, 65) whose inputs have a mutually equal electrical behavior.

13. A circuit arrangement as claimed in any one of Claims 1 to 12, characterized in that the signals are processed in a time-discrete manner.

**Revendications**

1. Circuit de séparation d'un signal d'image couleur en un signal couleur contenu dans celui-ci sous forme de sous-porteuse couleur modulée et en un signal de luminance dans lequel deux éléments retardateurs (1, 2) montés successivement qui présentent respectivement pour les signaux PAL un temps de retard de deux lignes d'image et pour les signaux NTSC, un temps de retard d'une ligne d'image, permettent d'utiliser les signaux disponibles simultanément de trois lignes d'image après qu'il ont respectivement traversé un filtre passe-bande (6, 7, 8) pour signaux couleur en vue de l'obtention de deux fonctions de filtre en peigne et dans lequel, à partir des signaux des trois lignes d'image et des deux fonctions de filtre en peigne, le signal avec la valeur instantanée moyenne d'amplitude est filtré en permanence, ce signal filtré représentant le signal couleur séparé qui est additionné au signal d'image couleur retardé d'un temps de retard pour l'obtention du signal de luminance,
caractérisé en ce qu'il est prévu un filtre médian à un seul étage (21), dans lequel les amplitudes des signaux simultanément présents des trois lignes d'image et des deux fonctions de filtre en peigne sont réciproquement comparées dans un étage comparateur qui, en fonction des résultats de la comparaison, produit des signaux de comparaison logiques à une logique de sélection (30) qui, à l'aide des signaux de comparaison, détermine en permanence celui des signaux amenés à l'étage comparateur qui présente la valeur instantanée moyenne d'amplitude et le commute sur la sortie du filtre médian.

2. Circuit selon la revendication 1,
caractérisé en ce que cinq comparateurs (22, 23, 24, 25, 26) sont prévus dans l'étage comparateur et comparent respectivement deux signaux entre eux et, en fonction du signal de comparaison, produisent un signal de sortie logique et dont trois comparateurs (22, 24, 26) sont prévus pour la comparaison des signaux présents simultanément des trois lignes d'image entre eux et deux comparateurs (23, 25) sont prévus pour la comparaison des signaux des fonctions de filtre en peigne avec respectivement le signal des trois lignes d'image qui n'a pas été utilisé pour la formation de la fonction respective de filtre en peigne.

**3.** Circuit selon la revendication 1 ou 2,

caractérisé en ce que dans la logique de sélection (30) sont produits cinq signaux de commutation qui sont affectés aux signaux simultanément présents A, B et C des trois lignes d'image ou aux deux signaux AB et BC des fonctions de filtre en peigne et qui sont obtenus selon les opérations logiques suivantes :

$$SWA = [(A>B) \wedge (C>A) \wedge (BC>A)] \vee [(\overline{A>B}) \wedge (\overline{C>A}) \wedge (\overline{BC>A})]$$

$$SBW = [(A>B) \wedge (B>C)] \vee [(\overline{A>B}) \wedge (\overline{B>C})],$$

$$SWC = [(B>C) \wedge (C>A) \wedge (\overline{AB>C})] \vee [(\overline{B>C}) \wedge (\overline{C>A}) \wedge (AB>C)],$$

$$SWAB = [(B>C) \wedge (C>A) \wedge (AB>C)] \vee [(\overline{B>C}) \wedge (\overline{C>A}) \wedge (\overline{AB>C})],$$

$$SWBC = [(A>B) \wedge (C>A) \wedge (\overline{BC>A})] \vee [(\overline{A>B}) \wedge (\overline{C>A}) \wedge (BC>A)]$$

**4.** Circuit selon la revendication 3,

caractérisé en ce que les cinq signaux de commutation sont dirigés sur cinq commutateurs (31, 32, 33, 34, 35) qui commutent respectivement sur la sortie du filtre le signal d'entrée affecté au signal de commutation respectif de l'étage comparateur en fonction du résultat du signal de commutation.

**5.** Circuit selon l'une des revendications 1 à 4,

caractérisé en ce qu'un dispositif de calcul de moyenne (42) est monté en aval du filtre médian et divise éventuellement plusieurs signaux commutés sur la sortie du filtre médian par le nombre des signaux commutés sur la sortie du filtre médian et met à disposition ce signal pour le traitement ultérieur du signal à la place du signal de sortie du filtre.

**6.** Circuit selon l'une des revendications 1 à 4,

caractérisé en ce que les signaux de commutation sont affectés à différentes classes de priorité et en ce que, pour plusieurs signaux de commutation activés simultanément par la logique de comparaison (30), seul le signal de commutation présentant la priorité maximale est commuté sur la sortie du filtre médian.

**7.** Circuit selon la revendication 6,

caractérisé en ce que les différentes priorités sont réalisées à l'aide des opérations de comparaison sélectionnées en conséquence de la logique de sélection (30).

**8.** Circuit selon la revendication 7,

caractérisé en ce que les opérations logiques suivantes sont effectuées dans la logique de comparaison pour l'obtention d'un signal de commutation :

$$SWA = [(A>B) \wedge (C>A) \wedge (BC>A) \wedge (\overline{B>C})] \vee [(\overline{A>B}) \wedge (\overline{C>A})] \wedge$$

$$(\overline{BC>A}) \wedge (B>C)]$$

$$SWB = [(A>B) \wedge (B>C)] \vee [(\overline{A>B}) \wedge (\overline{B>C})],$$

$$SWC = [(B>C) \wedge (C>A) \wedge (\overline{AB>C}) \wedge (\overline{A>B})] \vee [(\overline{B>C}) \wedge (\overline{C>A}) \wedge$$

$$(AB>C) \wedge (A>B)]$$

$$SWAB = [(B>C) \wedge (C>A) \wedge (AB>C) \wedge (\overline{A>B})] \vee [(\overline{B>C}) \vee (\overline{C>A}) \wedge$$

$$(\overline{AB>C}) \wedge (\overline{A>B})]$$

$$SWBC = [(A>B) \wedge (C>A) \wedge (\overline{BC>A}) \wedge (\overline{B>C})] \vee [(\overline{A>B}) \wedge (\overline{C>A}) \wedge$$

$$(BC>A) \wedge (B>C)]$$

**9.** Circuit selon l'une des revendications 1 à 8,

EP 0 501 558 B1

caractérisé en ce que sont prévus des éléments de compensation du temps de passage (71, 72, 74, 41, 76, 77, 78) qui retardent à titre supplémentaire le signal d'image couleur retardé avant l'addition avec le signal couleur séparé, de telle sorte qu'une compensation des temps de passage du traitement du signal en vue de l'obtention du signal couleur séparé, en particulier du filtre passe-bande (6.7, 8) et du filtre médian (21) est assurée.

10. Circuit selon l'une des revendications 1 à 9,
caractérisé en ce que les signaux des trois lignes d'image sont amenés au filtre médian (21) avec un retard temporel tel, qu'ils se présentent à l'entrée du filtre médian dans la même position de phase que les deux fonctions de filtre en peigne.

11. Circuit selon l'une des revendications 1 à 10,
caractérisé en ce qu'une compensation de charge est prévue et intervient par le fait que les sorties d'éléments de circuit équivalents qui traitent en parallèle les signaux des trois lignes d'image et/ou de la fonction de filtre en peigne sont chargées de la même manière.

12. Circuit selon la revendication 11,
caractérisé en ce que la compensation de charge est assurée par le fait que les sorties des éléments de circuit similaires (71, 6, 7, 8; 74, 10, 12, 14, 16, 18; 78, 42) sont chargées avec le même nombre d'entrées d'éléments de circuit montés en aval (73, 19, 51, 52, 53, 54, 65) qui présentent entre eux un même comportement électrique de leurs entrées.

13. Circuit selon l'une des revendications 1 à 12,
caractérisé en ce que le traitement du signal s'effectue de manière discrète dans le temps.

13